# EUROPÄISCHE PATENTSCHRIFT

(11) **EP 2 088 095 B1**
(45) Veröffentlichungstag und Bekanntmachung des Hinweises auf die Patenterteilung: **04.06.2014**
(21) Anmeldenummer: 08011570.2
(22) Anmeldetag: 26.06.2008
(51) Int. Cl.: B65D 88/68, B65G 53/46, B65G 65/48, A24B 3/18, F26B 3/04

(54) **Vorrichtung zur Behandlung Schüttgütern, insbesondere von Tabak**
Device for treating bulk goods, in particular tobacco
Dispositif de manipulation de matériaux en vrac, en particulier de tabac

(30) Priorität: 08.02.2008 DE 202008001800 U
(43) Veröffentlichungstag der Anmeldung: 12.08.2009
(73) Patentinhaber: Köhl Maschinenbau AG, 6868 Wecker (LU)
(72) Erfinder: Werner, Hartmut, 21395 Tespe (DE)
(74) Vertreter: GROSSE SCHUMACHER KNAUER VON HIRSCHHAUSEN

(56) Entgegenhaltungen:
- EP-A- 1 450 122
- WO-A-01/51393
- WO-A-91/00696
- DE-A1- 3 005 241
- DE-C1- 3 439 274
- DE-U- 1 885 880
- FR-A- 2 482 568
- US-A- 2 907 499
- US-B1- 6 581 608

## Beschreibung

Die Erfindung betrifft eine Vorrichtung zur Behandlung von Schüttgütern, insbesondere von Tabak, mit wenigstens einer Zellenradschleuse, deren Gehäuse ihre Zellen periodisch verschliessende Gehäusebereiche und die Zellen wieder freigebende Anschlussöffnungen aufweist.

DE 3005241 A1 betrifft eine Zellradschleuse mit einem Zuführungsschacht und einer Zuteilvorrichtung für das Zellenrad, wobei das aus der Zuteilvorrichtung herausrieselnde Gut in die jeweils freigegebene Zellenöffnung des Zellenrades gelangt.

Derartige Vorrichtungen dienen der temporären Ausbildung geschlossener Kammersysteme, die beispielsweise zur Volumenvergrösserung von Rippenschnitt- und Blattschnitttabaken, zum Anfeuchten von Tabakrippen, Nelken und DIET-Tabaken, zum Flavorisieren von Schnitttabaken, zum Auflockern und Mischen von Schnitttabaken, zum Recyceln von Ausschuss-Zigaretten oder für Trocknungszwecke eingesetzt werden. Die Behandlung erfolgt mittels Arbeitsfluiden, welche zusammen mit dem Schüttgut in die geschlossenen Kammersysteme eingebracht werden. Die Zuführung des unbehandelten Schüttgutes sowie die Abführung des behandelten Schüttgutes erfolgt regelmässig auf Schwingförderrinnen welche den Anschlussöffnungen des geschlossenen Kammersystems zugeordnet sind. Die bekannten Vorrichtungen zur Behandlung von Schüttgütern haben jedoch den Nachteil, dass bei der Verschleusung in den Zellen auftretende Anhaftungen von Schüttgut den Behandlungsprozess des Schüttgutes nachhaltig stören und schliesslich sogar ein vollständiges Dichtsetzen der Zellenradschleuse verursachen können.

Der Erfindung liegt deshalb die Aufgabe zugrunde, eine Vorrichtung der eingangs genannten Gattung aufzuzeigen, mit der das Anwachsen von bei der Verschleusung auftretenden Anhaftungen von Schüttgut in den Zellen der Zellenradschleuse zuverlässig verhindert ist.

Diese Aufgabe ist erfindungsgemäß durch eine Vorrichtung mit den Merkmalen des Patentanspruches 1 gelöst. Vorteilhafte Weiterbildungen der Erfindung sind in den Unteransprüchen angegeben.

Die erfindungsgemäße Vorrichtung zur Behandlung von Schüttgütern zeichnet sich dadurch aus, daß die Zellenradschleuse wenigstens zwei Zellenräder mit ineinandergreifenden Zellflügeln aufweist. Die Zellenräder können somit nur mit zueinander entgegengesetztem Drehsinn bewegt werden, wobei die Zellflügel eines der Zellenräder die Flügelzwischenräume der Zellflügel des jeweils anderen Zellenrades von Anhaftungen befreien. Das der Vorrichtung als Schüttgutstrom zugeführte Schüttgut wird an den Zellflügeln portioniert und in den Flügelzwischenräumen in Form einzelner Schüttgutportionen verschleust. Bei der Verschleusung auftretende Anhaftungen von Schüttgut werden somit nach dem Verschleusen einer jeden Schüttgutportion abgestreift und portionsweise in den unbehandelten Schüttgutstrom zurückgeführt. Damit dienen die Zellflügel nicht nur als Schleusorgane, sondern fungieren zusätzlich als Räumorgane, mit welchen ein Anwachsen von bei der Verschleusung auftretenden Anhaftungen aus Schüttgut zuverlässig verhindert ist. Außerdem sind Störungen des Behandlungsprozesses vermieden und durch Reinigungsmaßnahmen hervorgerufene Betriebsausfallzeiten sind maßgeblich reduziert. Die Behandlung des Schüttgutes erfolgt automatisch und umfaßt das selbsttätige Abstreifen der Anhaftungen sowie die selbsttätige Rückführung der abgestreiften Anhaftungen in den Schüttgutstrom, so daß manuelle Eingriffe und damit auch Kontakte des Schüttgutes mit pathogenen Keimen und Bakterien vorteilhaft vermieden sind.

Nach einer ersten Weiterbildung der erfindungsgemäßen Vorrichtung ist wenigstens eine der Anschlußöffnungen auf den Eingriffsbereich der ineinandergreifenden Zellflügel ausgerichtet. Bei einer Drehrichtung, bei dem die Zellflügel aus ihrem Eingriffsbereich herausdrehen und gleichzeitig der als Beschickungsöffnung ausgebildeten Anschlußöffnung entgegendrehen, erfolgt eine selbsttätige und fortwährende Aufteilung der Schüttgutportionen auf zwei den Zellenrädern eigene Schleuswege. Das hat den Vorteil, daß aus einem der Schleuswege resultierende Anhaftungen an dem jeweils anderen Schleusweg abgestreift werden können. Dadurch werden die Schleusbewegungen einerseits zum automatischen bzw. selbsttätigen Weitertransport der einzelnen Schüttgutportionen und andererseits zum selbsttätigen Abstreifen der bei der Verschleusung auftretenden Anhaftungen genutzt.

Nach einer nächsten Weiterbildung der Erfindung weist das Gehäuse zwischen den Anschlußöffnungen ausgebildete Eintrittsbereiche auf, in welchen Zuführöffnungen für ein Arbeitsfluid angeordnet sind. Der wegen der Zuführung des Arbeitsfluides erforderliche Druckausgleich kann über die Spaltmaße zwischen den Zellenflügeln und dem Gehäuse erfolgen. Auf diese Weise werden die einzelnen Schüttgutportionen dem Arbeitsfluid während des Verschleusens ausgesetzt. Die Behandlungsdauer der mit einem Schleusvorgang verschleusten Schüttgutportion ist damit von der Zeitdauer eines einzelnen Schleusvorganges abhängig. Die Zeitdauer der Schleusvorgänge kann über die Drehzahl der Zellenräder, die Größe der Zellenräder oder über eine vertikale Aneinanderreihung mehrerer erfindungsgemäßer Vorrichtungen beeinflußt werden. Als Arbeitsfluide werden insbesondere Gase, Flüssigkeiten sowie deren Gemische, insbesondere jedoch wasser- oder lösungsmittelhaltige Dämpfe eingesetzt.

Bei Zuführung größerer Mengen eines Arbeitsfluides, insbesondere bei der Zuführung von Trockenluft, ist es von Vorteil, wenn das Gehäuse zwischen den Anschlußöffnungen ausgebildete Austrittsbereiche aufweist, in welchen Abführöffnungen für das Arbeitsfluid angeordnet sind. Die Abführöffnungen weisen eine Größe auf, die das Passieren von einzelnen Schüttgutteilchen auf ein Minimum reduziert.

Um eine möglichst kurze und gleichzeitig vollständige Behandlung des Schüttgutes zu erwirken, ist es von besonderem Vorteil, wenn die Schüttgutportionen und das Arbeitsfluid während des Verschleusens miteinander verwirbelt werden. Dazu weist jeder zeitweise eine Zelle verschließende Gehäusebereich wenigstens einen Teilabschnitt eines Austrittsbereiches sowie wenigstens einen Teilabschnitt eines Eintrittsbereiches auf. Die einzelne Zelle fungiert damit als Spülraum, welcher von dem Arbeitsfluid unter der Ausbildung von Verwirbelungen durchströmt wird. Die Austrittsbereiche und Eintrittsbereiche weisen bezogen auf die Umlaufrichtung des Zellenrades eine alternierende Anordnung zueinander auf, so daß der Strömungsweg durch die Rotation des Zellenrades eine fortwährende Änderung seines Verlaufes erfährt. Die ständige Änderung des Strömungswegverlaufes hat eine nachhaltige Verbesserung des Behandlungsprozesses zur Folge. Durch die Formgebung der Ein- und Austrittsbereiche sowie durch die Anordnung der Ein- und Austrittsbereiche zueinander können abrupte oder auch schwellende Wechsel der Strömungswegverläufe erzeugt werden. Um zu verhindern, daß das Schüttgut die Abführöffnungen der Austrittsbereiche durch die dort auftretende Sogwirkung dichtsetzt, ist die Summe aller Strömungsquerschnitte der Abführöffnungen kleiner als die Summe aller Strömungsquerschnitte der Zuführöffnungen. Insbesondere weisen die Querschnittssummen von Zuführöffnungen zu Abführöffnungen ein Verhältnis von etwa 1:3 auf.

Nach einer nächsten Weiterbildung der Erfindung ist jedem Austrittsbereich und jedem Eintrittsbereich wenigstens eine Druckausgleichskammer zugeordnet. Diese dient der gleichmäßigen Strömungsbelastung der Aus- und Eintrittsbereiche und insbesondere auch der Zusammenführung der in einem Eintritts- oder einem Austrittsbereich angeordneten Zu- und Abführöffnungen auf einen gemeinsamen Versorgungsstutzen.

Nach einer anderen Weiterbildung der Erfindung ist vorgesehen, daß die Zuführöffnungen als Einspritzdüsen ausgebildet sind, durch welche hindurch das Arbeitsfluid in eine festgesetzte Richtung gespritzt oder gesprüht wird. Die dabei auftretende Verwirbelung ist durch sich fortwährend drehende Anströmwinkel gekennzeichnet, welche durch die Drehbewegungen der rotierenden Zellenräder in Bezug auf die feststehenden Einspritzdüsen hervorgerufen wird. Die sich drehenden Anströmwinkel verhindern insbesondere bei langfaserigen Schüttgütern die Entstehung von Verzwirbelungen. Im einfachsten Fall sind die Zuführöffnungen jedoch als im Eintrittsbereich des Gehäuses angeordnete Loch- oder Gitterstrukturen ausgebildet. Den Zuführöffnungen ist vorzugsweise ein Druckerzeuger zugeordnet, mit welchem das Arbeitsfluid in die Zellen eingespritzt wird. Das Verwirbeln umfaßt im Rahmen dieser Erfindung auch das Vermischen, Vermengen und Verrühren einer Schüttgutportion mit dem Arbeitsfluid.

Eine verbesserte Verhinderung des Anwachsens von bei der Verschleusung auftretenden Anhaftungen ist dadurch erreicht, daß die Zellen jeweils einen abgerundeten Zellenboden sowie zwei planflächige Zellenflanken aufweisen, wobei die Zellenflanken als tangentiale Erweiterungen des Zellenbodens ausgebildet sind. Der Rundungsverlauf des Zellenbodens dient der Spaltminimierung zwischen den abgerundeten Zellenböden des einen Zellenrades und den freien Enden der Zellflügel des jeweils anderen Zellenrades. Die Einspritzdüsen sind mit Vorteil derart eingestellt das Arbeitsfluid in Form einzelner Freistrahlen an den abgerundeten Zellenböden abgelenkt wird. Der Rundungsverlauf ist dabei von dem Durchmesser der Zellenräder sowie dem Achsabstand zwischen den Zellenrädern abhängig.

Eine besonders weitgehende Verhinderung des Anwachsens von Anhaftungen ist erreicht, wenn der kleinste Abstand des abgerundeten Zellenbodens zur Drehachse seines Zellenrades zuzüglich dem halben Durchmesser des jeweils anderen Zellenrades etwa dem Achsabstand zwischen den Drehachsen der Zellenräder entspricht. Um das Spaltmaß während des dynamischen Prozesses, also bei Rotation der Zellenräder, über eine maximale Laufstrecke hinweg konstant zu halten, weisen die beiden Zellenräder etwa den gleichen Durchmesser auf, wobei dieser mit Vorteil etwa 5/7 des Achsabstandes zwischen den Drehachsen der Zellenräder entspricht. Ausserdem beträgt der Radius der abgerundeten Zellenböden mit Vorteil etwa 3/25 des Achsabstandes zwischen den Drehachsen der Zellenräder.

Selbstverständlich liegt es im Rahmen der Erfindung, die freien Aussenkanten der Zellflügel mit weichelastischen Lippen zu versehen, welche an den abgerundeten Zellenböden abgleiten und diese vorteilhaft auch von feinsten Anhaftungen befreien.

Ein Ausführungsbeispiel der Erfindung, aus dem sich weitere erfinderische Merkmale ergeben, ist in der Zeichnung dargestellt. Es zeigen:
- Fig. 1:: eine Seitenansicht der erfindungsgemässen Vorrichtung im Mittelschnitt gemäss einem ersten Ausführungsbeispiel;
- Fig. 2:: eine perspektivische Darstellung der Vorrichtung gemäss Fig. 1 in einem Anwendungsbeispiel; und
- Fig. 3:: eine teilgeschnittene Seitenansicht der Vorrichtung im Mittelschnitt gemäss einem zweiten Ausführungsbeispiel.

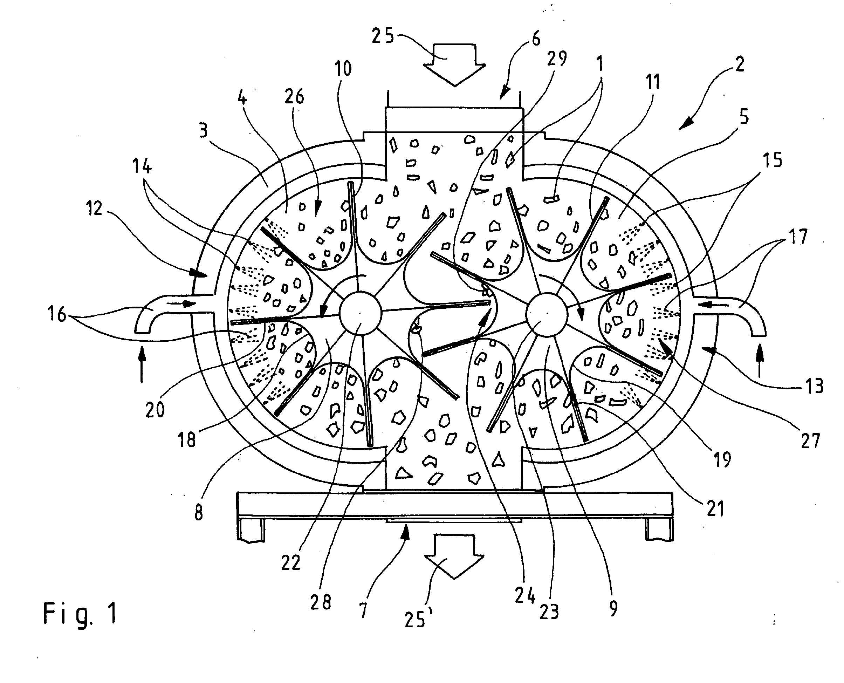

Die Fig. 1 zeigt eine erfindungsgemässe Vorrichtung zur Behandlung von Tabak 1 mit einer Zellenradschleuse 2, deren Gehäuse 3 ihre Zellen 4, 5 periodisch verschliessende Gehäusebereiche und die Zellen 4, 5 wieder freigebende Anschlussöffnungen 6, 7 aufweist. Ausserdem weist die Zellenradschleuse 2 zwei Zellenräder 8, 9 mit ineinandergreifenden Zellflügeln 10, 11 auf. Die Anschlussöffnung 6 ist als Beschickungsöffnung ausgebildet und ist auf den Eingriffsbereich der ineinandergreifenden Zellflügel 10, 11 ausgerichtet. Das Gehäuse 3 weist zwei zwischen den Anschlussöffnungen 6, 7 ausgebildete Eintrittsbereiche 12, 13 auf, in welchen Zuführöffnungen 14, 15 für ein Arbeitsfluid 16, 17 angeordnet sind. Die Zellen 4, 5 weisen jeweils einen abgerundeten Zellenboden 18, 19 sowie zwei planflächige Zellenflanken 20, 21 auf, wobei die Zellenflanken 20, 21 als tangentiale Erweiterungen des Zellenbodens 18, 19 ausgebildet sind.

Der kleinste Abstand des abgerundeten Zellenbodens 18, 19 zur Drehachse 22, 23 seines Zellenrades 8, 9 zuzüglich dem halben Durchmesser des jeweils anderen Zellenrades 8, 9 abzüglich dem Abstand zwischen den Drehachsen 22, 23 entspricht dem Abziehspalt 24.

Die Vorrichtung arbeitet wie folgt:

Ein Tabak 1 enthaltender Schüttgutstrom 25, 25' wird portioniert und in Form einzelner Schüttgutportionen 26, 27 in den Zellen 4, 5 der Zellenradschleuse 2 verschleust. Bei der Verschleusung auftretende Anhaftungen 28, 29 von Tabak 1 werden nach dem Verschleusen einer jeden Schüttgutportion 26, 27 von den Zellflügeln 10, 11 abgestreift und portionsweise in den unbehandelten Schüttgutstrom 25, 25' zurückgeführt. Die Schüttgutportionen 26, 27 werden auf zwei den Zellenrädern 8, 9 eigene Schleuswege aufgeteilt, aufweichen sie einem Arbeitsfluid 16, 17 ausgesetzt werden. Dabei werden die Schüttgutportionen 26, 27 und das Arbeitsfluid 16, 17 miteinander verwirbelt.

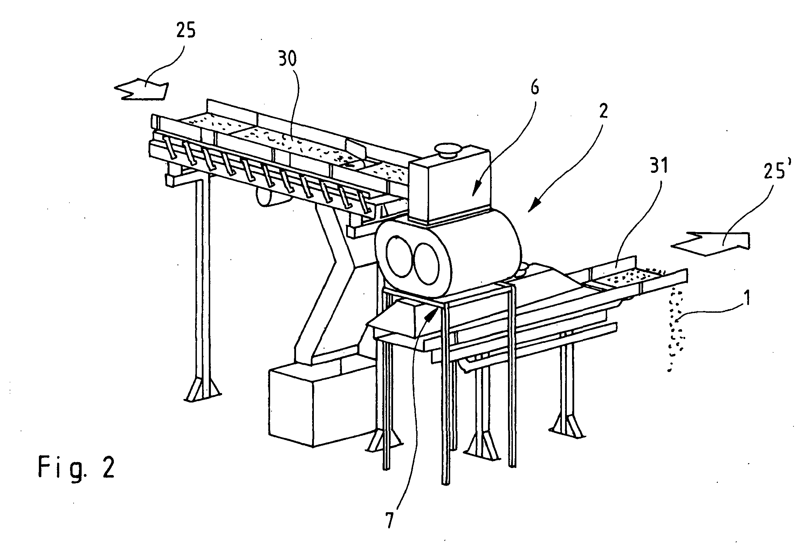

Die Fig. 2 zeigt eine perspektivische Darstellung der erfindungsgemässen Vorrichtung gemäss Fig. 1 in einem Anwendungsbeispiel. Hier sind den Anschlussöffnungen 6, 7 der Zellenradschleuse 2 zwei Schwingförderrinnen 30, 31 zugeordnet, auf denen der Tabak 1 in Form des Schüttgutstroms 25, 25' weiterbefördert wird.

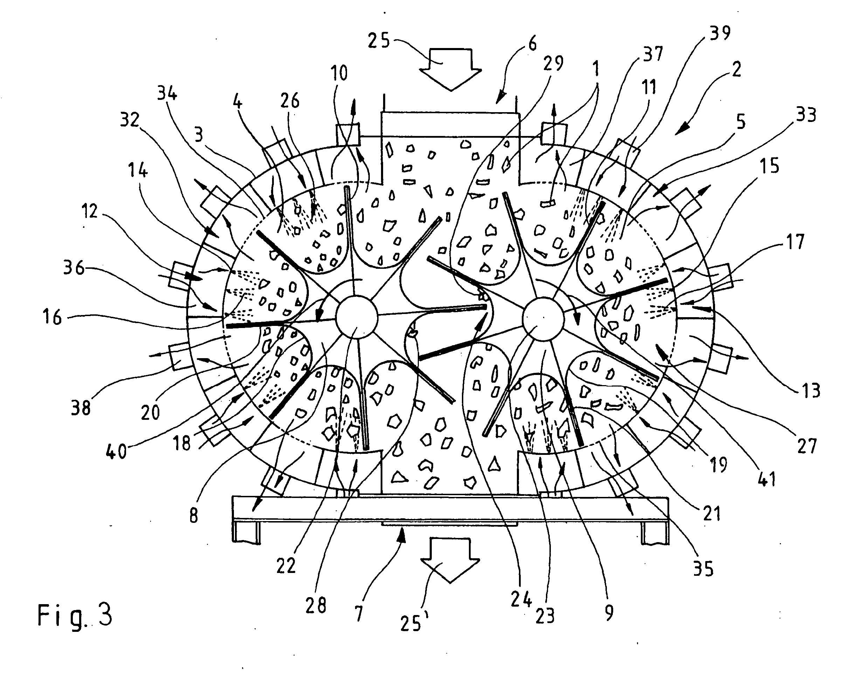

Die Fig. 3 zeigt ebenfalls eine erfindungsgemässe Vorrichtung zur Behandlung von Tabak 1 mit einer Zellenradschleuse 2, deren Gehäuse 3 ihre Zellen 4, 5 periodisch verschliessende Gehäusebereiche und die Zellen wieder freigebende Anschlussöffnungen 6, 7 aufweist. Das Gehäuse 3 weist auch hier zwei zwischen den Anschlussöffnungen 6, 7 ausgebildete Eintrittsbereiche 12, 13 auf, in welchen Zuführöffnungen 14, 15 für ein Arbeitsfluid 16, 17 angeordnet sind. Ausserdem weist das Gehäuse 3 bei diesem zweiten Ausführungsbeispiel zwischen den Anschlussöffnungen 6, 7 ausgebildete Austrittsbereiche 32, 33 auf in welchen Abführöffnungen 34, 35 für das Arbeitsfluid 16, 17 angeordnet sind. Jeder zeitweise eine Zelle 4, 5 verschließende Bereich des Gehäuses 3 weist wenigstens einen Teilabschnitt eines Austrittsbereiches 32, 33 sowie wenigstens einen Teilabschnitt eines Eintrittsbereiches 12, 13 auf, so daß die Zellen 4, 5 als Spülkammern fungieren. Jedem Austrittsbereich 32, 33 und jedem Eintrittsbereich 12, 13 ist eine Druckausgleichskammer 36, 37 zugeordnet, die der Zusammenführung der in einem einzigen Eintrittsbereich 12 bzw. 13 angeordneten Zuführöffnungen 14 bzw. 15 oder der Zusammenführung der in einem einzigen Austrittsbereich 32 bzw. 33 angeordneten Abführöffnungen 34 bzw. 35 auf einen gemeinsamen Versorgungsstutzen 38, 39 dient. Die Pfeile 40, 41 geben die Drehrichtung der Zellenräder 8, 9 an. Sämtliche keine Bezugszahl tragenden Pfeile symbolisieren die Strömungsrichtung des Arbeitsfluides 16, 17. Gleiche Bauteile sind mit gleichen Bezugszahlen versehen.

## Patentansprüche

1. Vorrichtung zur Behandlung von Schüttgütern, insbesondere von Tabak (1), mit wenigstens einer Zellenradschleuse (2), deren Gehäuse (3) Anschlussöffnungen (6, 7) aufweist, wobei Bereiche des Gehäuses (3) bewegbare Zellen (4, 5) periodisch verschließen und die Anschlussöffnungen die Zellen (4, 5) wieder freigeben, wobei die Zellenradschleuse (2) wenigstens zwei Zellenräder (8, 9) mit ineinandergreifenden Zellflügeln (10, 11) aufweist, **dadurch gekennzeichnet, dass** das Gehäuse (3) zwischen den Anschlussöffnungen (6, 7) ausgebildete Eintrittsbereiche (12, 13) aufweist, in welchen Zuführöffnungen (14, 15) für ein Arbeitsfluid (16, 17) angeordnet sind.

2. Vorrichtung nach Anspruch 1 **dadurch gekennzeichnet, dass** wenigstens eine der Anschlussöffnungen (6, 7) auf den Eingriffsbereich der ineinandergreifenden Zellflügel (10, 11) ausgerichtet ist.

3. Vorrichtung nach Anspruch 1 oder 2, **dadurch gekennzeichnet, dass** das Gehäuse (3) zwischen den Anschlussöffnungen (6, 7) ausgebildete Austrittsbereiche (32, 33) aufweist, in welchen Abführöffnungen (34, 35) für das Arbeitsfluid (16, 17) angeordnet sind.

4. Vorrichtung nach Anspruch 3, **dadurch gekennzeichnet, dass** jeder zeitweise eine Zelle (4, 5) verschließende Bereich des Gehäuses (3) wenigstens einen Teilabschnitt eines Austrittsbereiches (32, 33) sowie wenigstens einen Teilabschnitt eines Eintrittsbereiches (12, 13) aufweist.

5. Vorrichtung nach Anspruch 3 oder 4, **dadurch gekennzeichnet, dass** jedem Austrittsbereich (32, 33) und jedem Eintrittsbereich (12, 13) wenigstens eine Druckausgleichskammer (36, 37) zugeordnet ist.

6. Vorrichtung nach einem der Ansprüche 1 bis 5, **dadurch gekennzeichnet, dass** die Zuführöffnungen (14, 15) als Einspritzdüsen ausgebildet sind.

7. Vorrichtung nach einem der Ansprüche 1 bis 6, **dadurch gekennzeichnet, dass** die Zellen (4, 5) jeweils einen abgerundeten Zellenboden (18, 19) sowie zwei planflächige Zellenflanken (20, 21) aufweisen, wobei die Zellenflanken (20, 21) als tangentiale Erweiterungen des Zellenbodens (18, 19) ausgebildet sind.

8. Vorrichtung nach Anspruch 7, **dadurch gekennzeichnet, dass** der kleinste Abstand des abgerundeten Zellenbodens (18, 19) zur Drehachse (22, 23) seines Zellenrades (8, 9) zuzüglich dem halben Durchmesser des jeweils anderen Zellenrades (8, 9) etwa dem Achsabstand zwischen den Drehachsen (22, 23) der Zellenräder (8, 9) entspricht.

9. Vorrichtung nach einem der Ansprüche 1 bis 8, **dadurch gekennzeichnet, dass** die beiden Zellenräder (8, 9) etwa den gleichen Durchmesser aufweisen, welcher etwa 5/7 des Achsabstandes zwischen den Drehachsen (22, 23) Zellenräder (8, 9) entspricht.

10. Vorrichtung nach einem der Ansprüche 7 bis 9, **dadurch gekennzeichnet, dass** der Radius der abgerundeten Zellenböden (18, 19) etwa 3/25 des Achsabstandes zwischen den Drehachsen (22, 23) der Zellenräder (8, 9) entspricht.

## Claims

1. Apparatus for treating loose materials, particularly tobacco (1), including at least one star feeder (2), whose housing (3) has connecting openings (6, 7), wherein regions of the housing (3) periodically close movable cells (4, 5) and the connecting openings again uncover the cells (4, 5), wherein the star feeder (2) has at least two star wheels (8,9) with meshing cell vanes (10, 11), **characterised in that** the housing has inlet regions (12, 13), which are formed between the connecting openings (6, 7) and in which supply openings (14, 15) for a working fluid (16, 17) are disposed.

2. Apparatus as claimed in claim 1, **characterised in that** at least one of the connecting openings (6, 7) is directed towards the meshing region of the meshing cell vanes (10, 11).

3. Apparatus as claimed in claim 1 or 2, **characterised in that** the housing (3) has outlet regions (32, 33), which are formed between the connecting openings (6, 7) and in which discharge openings (34, 35) for the working fluid (16, 17) are disposed.

4. Apparatus as claimed in claim 3, **characterised in that** each region of the housing (3) which periodically closes a cell (4, 5) has at least one section of an outlet region (32, 33) and at least one section of an inlet region (12, 13).

5. Apparatus as claimed in claim 3 or 4, **characterised in that** associated with each outlet region (32, 33) and with each inlet region (12, 13) there is at least one pressure balancing chamber (36, 37).

6. Apparatus as claimed in one of claims 1 to 5, **characterised in that** the supply openings (14, 15) are constructed in the form of injection nozzles.

7. Apparatus as claimed in one of claims 1 to 6, **characterised in that** the cells (4,5) each have a rounded cell base (18, 19) and two planar cell flanks (20, 21), whereby the cell flanks (20, 21) are constructed in the form of tangential extensions of the cell base (18, 19).

8. Apparatus as claimed in claim 7, **characterised in that** the smallest spacing of the rounded cell base (18, 19) from the rotary shaft (22, 23) of its star wheel (8, 9) plus half the diameter of the respective other star wheel (8, 9) corresponds approximately to the shaft spacing between the rotary shafts (22, 23) of the star wheels (8, 9).

9. Apparatus as claimed in one of claims 1 to 8, **characterised in that** the two star wheels (8, 9) have approximately the same diameter, which corresponds approximately to 5/7 of the shaft spacing between the rotary shafts (22, 23) of the star wheels (8, 9).

10. Apparatus as claimed in one of claims 7 to 9, **characterised in that** the radius of the rounded cell bases (18, 19) corresponds approximately to 3/25 of the shaft spacing between the rotary shafts (22, 23) of the star wheels (8, 9).

## Revendications

1. Dispositif pour le traitement de matériaux en vrac, en particulier de tabac (1), avec au moins un sas à roue cellulaire (2) dont le carter (3) comporte des ouvertures de raccord (6, 7), des parties du carter (3) fermant périodiquement des cellules (4, 5) mobiles et les ouvertures de raccord dégageant les cellules (4, 5) à nouveau, le sas à roue cellulaire (2) comportant au moins deux roues cellulaires (8, 9) avec des palettes (10, 11) qui s'engrènent les unes dans les autres, **caractérisé en ce que** le carter (3) présente des zones d'entrée (12, 13) formées entre les ouvertures de raccord (6, 7), où sont ménagés des orifices de refoulement (14, 15) pour un fluide de travail (16, 17).

2. Dispositif selon la revendication 1, **caractérisé en ce qu'**au moins une des ouvertures de raccord (6, 7) est orientée vers la zone d'emprise des palettes (10, 11) qui s'engrènent les unes dans les autres.

3. Dispositif selon la revendication 1 ou 2, **caractérisé en ce que** le carter (3) comporte des zones de sortie (32, 33) formées entre les ouvertures de raccord (6, 7), où sont ménagés des orifices d'évacuation (34, 35) pour le fluide de travail (16, 17).

4. Dispositif selon la revendication 3, **caractérisé en ce que** chaque partie du carter (3) fermant temporairement une cellule (4, 5) comprend au moins une fraction d'une zone de sortie (32, 33) ainsi qu'au moins une fraction d'une zone d'entrée (12, 13).

5. Dispositif selon la revendication 3 ou 4, **caractérisé en ce qu'**au moins une chambre d'équilibrage de pression (36, 37) est associée à chaque zone de sortie (32, 33) et à chaque zone d'entrée (12, 13).

6. Dispositif selon l'une des revendications 1 à 5, **caractérisé en ce que** les orifices de refoulement (14, 15) sont réalisés comme buses d'injection.

7. Dispositif selon l'une des revendications 1 à 6, **caractérisé en ce que** les cellules (4, 5) présentent chacune un fond de cellule arrondi (18, 19) ainsi que deux flancs de cellule plans (20, 21), lesdits flancs de cellule (20, 21) étant réalisés comme extensions tangentielles du fond de cellule (18, 19).

8. Dispositif selon la revendication 7, **caractérisé en ce que** l'espacement minimal entre le fond de cellule arrondi (18, 19) arrondi et l'axe de rotation (22, 23) de sa roue cellulaire (8, 9) ajouté au demi-diamètre de l'autre roue cellulaire (8, 9) correspond sensiblement à l'espacement axial entre les axes de rotation (22, 23) des roues cellulaires (8, 9).

9. Dispositif selon l'une des revendications 1 à 8, **caractérisé en ce que** les deux roues cellulaires (8, 9) ont sensiblement le même diamètre, lequel correspond sensiblement à 5/7 de l'espacement axial entre les axes de rotation (22, 23) des roues cellulaires (8, 9).

10. Dispositif selon l'une des revendications 7 à 9, **caractérisé en ce que** le rayon du fond de cellule arrondi (18, 19) correspond sensiblement à 3/25 de l'espacement axial entre les axes de rotation (22, 23) des roues cellulaires (8, 9).
